# EUROPEAN PATENT SPECIFICATION

(11) **EP 3 343 116 B1**
(45) Date of publication and mention of the grant of the patent: **29.07.2020**
(21) Application number: 17210868.0
(22) Date of filing: 28.12.2017
(51) Int. Cl.: F02P 11/00, F24D 17/00, F02P 5/15, F02D 41/04

(54) **COMBINED HEAT AND POWER GENERATION SYSTEM AND METHOD OF CONTROLLING THE SAME**
KOMBINIERTES WÄRME- UND ENERGIEERZEUGUNGSSYSTEM UND VERFAHREN ZUR STEUERUNG DAVON
SYSTÈME DE PRODUCTION COMBINÉE DE CHALEUR ET DE PUISSANCE ET SON PROCÉDÉ DE COMMANDE

(30) Priority: 03.01.2017 KR 20170000937; 03.01.2017 KR 20170000936
(43) Date of publication of application: 04.07.2018
(73) Proprietor: LG Electronics Inc., Yeongdeungpo-gu Seoul, 07336 (KR)
(72) Inventor: JANG, Heejoong, 08592 Seoul (KR)
(74) Representative: Vossius & Partner Patentanwälte Rechtsanwälte mbB

(56) References cited:
- JP-A- S6 090 962
- JP-A- 2009 019 577
- US-A1- 2009 206 599

## Description

### BACKGROUND OF THE INVENTION

### Field of the Disclosure

The present invention relates to a combined heat and power generation system and a method of controlling the same.

### Discussion of the Related Art

A combined heat and power generation system is a system that operates an engine using gas fuel to generate electric power through a generator and that converts heat generated from the engine into hot water and supplies the hot water to consumers.

The combined heat and power generation system may be connected to an air conditioner in order to supply electric power and heat or hot water to the air conditioner.

The engine rotates the generator in order to produce electric power. In addition, the electric power generated by the generator may be converted into commercial electric power, the current, voltage, and frequency of which have been converted by an electric power converter, and may be supplied to electric power consumers, such as buildings or air conditioners.

The engine is controlled such that the engine follows a target rate of revolution depending on the load applied thereto.

However, the rate of revolution of the engine is greatly affected by a change in the load. The load applied to the engine is generally changed linearly. Sometimes, however, the engine may be stopped due to an abrupt change in the load.

When the engine breaks down or when the load applied to the engine is abruptly reduced or removed, i.e. in an emergency, the rate of revolution of the engine is excessively increased due to overshoot. In order to follow the target rate of revolution, the rate of revolution of the engine is decreased; however, the gradient thereof is gradual. As a result, the excessively increased rate of revolution of the engine may damage the generator or other parts of the system.

Unlike a vehicle engine, the combined heat and power generation system has no separate brake. In an emergency, for example, when the size of a load is abruptly changed, the supply of fuel must be interrupted in order to stop the engine.

However, the rate of revolution of the engine is maintained for a predetermined amount of time due to the rotational inertia thereof. In addition, the rate of revolution of the engine is reduced due to the rotational inertia of a crankshaft, the fuel remaining in a fuel supply line and in the engine, and control delay. As a result, it takes a long time to stop the engine, whereby urgent braking is not possible.

A control method that is capable of urgently braking an engine having no brake in such an emergency is needed.

When the load applied to the engine is abruptly increased, the engine cannot follow a target rate of revolution, which is changed. Consequently, the engine is stopped, or the rate of revolution of the engine is abruptly reduced. For immediate recovery, however, the increase in the rate of revolution is drastic. As a result, hunting occurs until the engine stably follows the target rate of revolution.

On the other hand, when the load applied the engine is abruptly decreased, the rate of revolution of the engine is excessively increased. In order to follow the target rate of revolution, the rate of revolution of the engine is reduced. However, the gradient thereof is gradual. As a result, the excessively increased rate of revolution of the engine may damage the generator or other parts of the system.

Unlike a vehicle engine, the combined heat and power generation system has no separate brake. Consequently, there is a need for measures that are capable of solving the problem in which the rate of revolution of the engine is excessively increased when the size of load is abruptly changed.
JP S60 90962 A discloses a hot-water supplying and room heating equipment.

### SUMMARY OF THE DISCLOSURE

Accordingly, the present invention is directed to a combined heat and power generation system and a method of controlling the same that substantially obviate one or more problems due to limitations and disadvantages of the related art. The invention is specified in the claims.

An object of the present invention is to provide a combined heat and power generation system that is capable of changing the ignition angle to urgently stop an engine in an emergency and a method of controlling the same.

Additional advantages, objects, and features will be set forth in part in the description which follows and in part will become apparent to those having ordinary skill in the art upon examination of the following or may be learned from practice. The objectives and other advantages may be realized and attained by the structure particularly pointed out in the written description and claims hereof as well as the appended drawings.

To achieve these objects, the present invention provides a combined heat and power generation system as defined in claim 1.

The controller may set the ignition angle such that explosion is performed immediately after the piston passes a top dead center when the engine is normally operated, and may set the ignition angle such that explosion is performed immediately before the piston reaches a bottom dead center when the engine is urgently stopped.

According to the invention, the controller closes a fuel valve before the ignition angle is changed when the engine is urgently stopped.

The controller may maintain the ignition angle at a delay of 25 to 15 degrees when the engine is normally operated, and may change the ignition angle to 0 degree to a delay of 3 degrees when the engine is urgently stopped.

In another aspect of the present invention, a method of controlling a combined heat and power generation system according to claim 4 is disclosed.

The engine revolution follow-up control step may include setting the ignition angle such that explosion is performed immediately after a piston passes a top dead center, and the urgent engine stop step may include setting the ignition angle such that explosion is performed immediately before the piston reaches a bottom dead center.

The method of the invention includes closing a fuel valve before the ignition angle is changed.

The engine revolution follow-up control step may include maintaining the ignition angle at a delay of 25 to 15 degrees, and the ignition angle changing step may include changing the ignition angle to 0 degree to a delay of 3 degrees.

A combined heat and power generation system which is not part of the invention includes an engine using gas as fuel, a generator driven by the engine for producing electric power, an electric power converter for converting the electric power generated by the generator into commercial electric power, and a controller for controlling the engine, wherein, when a load is removed during the operation of the engine, the controller gradually reduces the opening degrees of an electronic throttle control (ETC) valve and a fuel valve in order to reduce overshoot in the rate of revolution of the engine and to reduce the rate of revolution of the engine, and, when the rate of revolution of the engine is equal to or less than a predetermined value, the controller completely closes the fuel valve in order to stop the engine.

When the amount of electric power generated by the electric power converter is zero or when an error signal is generated from the electric power converter, the controller may perform dynamic braking control in order to reduce the rate of revolution of the engine.

When the suction pressure of air/fuel mixture suctioned into the engine is decreased by 50 hPa or more per second and when the rate of revolution of the engine is increased by 20 RPM or more per second, the controller may perform the dynamic braking control.

The controller may reduce the opening degree of the ETC valve by 20 to 30 % for 1 second and the opening degree of the fuel valve by 30 to 40 % for 1 second in order to decrease the rate of revolution of the engine, which has been increased due to overshoot.

When the rate of revolution of the engine starts to decrease, the control may reduce the opening degree of the ETC valve by 1 % for 1 second and the opening degree of the fuel valve by 1 % for 1 second until the rate of revolution of the engine is equal to or less than the predetermined value.

The predetermined value of the rate of revolution of the engine may be 1000 RPM.

The load removal determination step may include determining whether the suction pressure of air/fuel mixture suctioned into the engine is decreased by 50 hPa or more per second and whether the rate of revolution of the engine is increased by 20 RPM or more per second.

The step of gradually reducing the opening degrees of the ETC valve and the fuel valve may include reducing the opening degree of the ETC valve by 20 to 30 % for 1 second and the opening degree of the fuel valve by 30 to 40 % for 1 second in order to decrease the rate of revolution of the engine, which has been increased due to overshoot.

When the rate of revolution of the engine starts to decrease, the opening degree of the ETC valve may be reduced by 1 % for 1 second and the opening degree of the fuel valve may be reduced by 1 % for 1 second until the rate of revolution of the engine is equal to or less than the predetermined value.

The predetermined value of the rate of revolution of the engine may be 1000 RPM.

It is to be understood that both the foregoing general description and the following detailed description of the present invention are exemplary and explanatory and are intended to provide further explanation of the present invention as claimed.

### BRIEF DESCRIPTION OF THE DRAWINGS

The present invention will become more fully understood from the detailed description given herein below and the accompanying drawings, which are given by illustration only, and thus are not limitative of the present invention, and wherein:
FIG. 1 is a conceptual view schematically showing an example of a combined heat and power generation system;
FIG. 2 is a block diagram showing sensors and valves connected to a controller;
FIG. 3 is a graph showing a change in the rate of revolution of an engine when a load is removed;
FIG. 4 is a graph showing a change in the pressure of a cylinder depending on the ignition angle;
FIG. 5 is a schematic view showing the states after explosion is performed in the cylinder for respective ignition angles;
FIG. 6 is a flowchart showing a method of controlling a combined heat and power generation system according to the present invention;
FIG. 7 is a graph showing a change in the rate of revolution of an engine at the time at which the ignition angle is controlled to be changed when a load is removed;
FIG. 8 is a flowchart showing a method of controlling a combined heat and power generation system; and
FIG. 9 is a graph showing a change in the rate of revolution of an engine when a load is removed.

### DESCRIPTION OF SPECIFIC EMBODIMENTS

Preferred embodiments of the present invention will be described below in more detail with reference to the accompanying drawings.

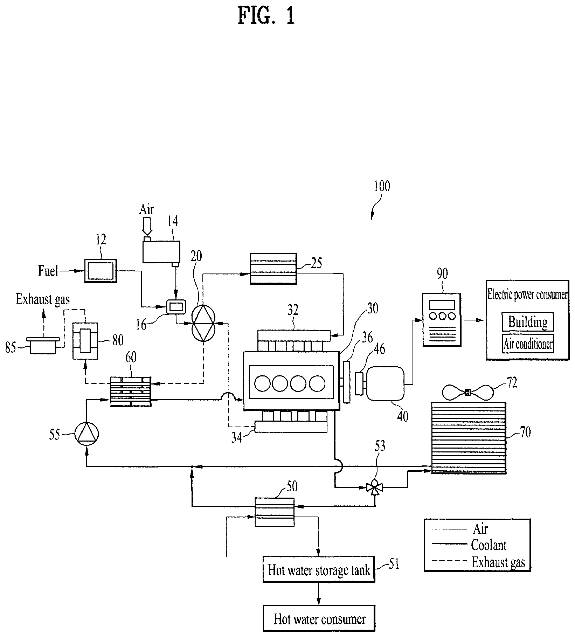

FIG. 1 is a conceptual view schematically showing an example of a combined heat and power generation system.

The combined heat and power generation system 100 is a system that operates an engine using a gas fuel to generate electric power through a generator and that converts heat generated from the engine into hot water and supplies the hot water to consumers.

The combined heat and power generation system 100 may be connected to an air conditioner in order to supply electric power and heat or hot water to the air conditioner.

The gas fuel may be supplied by a zero governor 12 while maintaining uniform outlet pressure irrespective of inlet pressure or the flow rate thereof. The zero governor 12 may obtain outlet pressure that is stable over a wide range. The zero governor 12 has a function of adjusting the pressure of the gas fuel that is supplied to the engine so as to be almost equal to atmospheric pressure. In addition, the zero governor 12 may include two solenoid valves to cut off the supplied fuel.

Air may be filtered by an air cleaner 14. As a result, clean air may be supplied. The air cleaner 14 may filter external air to be supplied to the engine in order to prevent the introduction of moisture and oil in the form of dust or mist.

The supplied gas fuel and air are mixed by a mixer 16. As a result, a mixture of air and fuel having a predetermined mixing ratio may be suctioned into the engine.

Between the zero governor 12 and the mixer 16 may be provided a fuel valve 13 for adjusting the flow rate of fuel that is introduced into the mixer 16.

A turbocharger 20 may compress the air/fuel mixture so as to have high temperature and pressure. The turbocharger 20 is a device that rotates a turbine using exhaust gas, compresses intake air using the rotary force, and sends the compressed air to a cylinder of the engine to increase output.

The turbocharger 20 is constituted by a turbine and a supercharger. The supercharger is directly connected to the turbine. A turbine wheel is rotated using energy from exhaust gas, and air suctioned by the supercharger is compressed and sent to the cylinder.

The turbocharger 20 is configured to have a structure in which the turbine wheel, to which a blade is mounted, and an impeller of the supercharger are connected to the same shaft and in which the turbine wheel and the impeller are surrounded by housings. The turbocharger 20 may be disposed in the vicinity of an exhaust manifold of the engine.

The air/fuel mixture is compressed by the turbocharger 20. At this time, the temperature of the air/fuel mixture increases. Consequently, the air/fuel mixture may be cooled by an intercooler 25, and may be introduced into the engine 30 through an intake manifold 32. The intercooler 25 cools the air/fuel mixture in order to increase the density of the air/fuel mixture. Consequently, the absolute amount of air/fuel mixture introduced into the engine is increased, thereby improving engine output.

The intercooler 25 may include an air-cooling type heat exchanger, which performs cooling using air, or a water-cooling type heat exchange channel, which performs cooling using water. The water-cooling type intercooler may use coolant as a medium. The water-cooling type intercooler may include a heat exchanger and a pump in order to discharge heat obtained from the compressed air/fuel mixture to the outside.

An electronic throttle control (ETC) valve 29 is provided at the inlet side of the intake manifold 32 to adjust the amount of air/fuel mixture introduced into the engine. When a large amount of air/fuel mixture is supplied, the engine output is increased.

A controller 110 adjusts the opening degree of the fuel valve 13 and the opening degree of the ETC valve 29 in order to control the operation of the engine 30. When the opening degree of the fuel valve 13 and the opening degree of the ETC valve 29 are increased, the rate of revolution of the engine is also increased.

The engine 30 is an internal combustion engine that is operated through four cycles, such as an intake cycle, a compression cycle, an explosion cycle, and an exhaust cycle, using the air/fuel mixture introduced through the intake manifold 32.

Exhaust gas generated when the engine 30 is operated is discharged through an exhaust manifold 34. At this time, the impeller of the turbocharger 20 is rotated.

The engine 30 rotates a generator 40 in order to produce electric power. To this end, a belt may be connected between a pulley 36, which is provided at one end of the rotary shaft of the engine 30, and a pulley 46, which is provided at one end of the rotary shaft of the generator 40.

The pulley 36 of the engine 30 and the pulley 46 of the generator 40 may be configured such that the ratio of the rates of revolution therebetween is about 1:3. That is, when the engine is rotated at 1000 RPM, the generator 40 may be rotated at about 3000 RPM.

The electric power generated by the generator 40 may be converted into commercial electric power, the current, voltage, and frequency of which have been converted by an electric power converter 90, and may be supplied to electric power consumers, such as buildings or air conditioners.

Meanwhile, a considerable amount of heat is generated from the engine 30 when the engine 30 is operated through gas combustion. Consequently, the coolant is circulated to absorb high-temperature heat generated from the engine through heat exchange.

For vehicles, a radiator is mounted in a coolant circulation channel to discharge waste heat of the engine. In the combined heat and power generation system 100, however, heat generated from the engine may be absorbed in order to generate hot water.

To this end, a hot water heat exchanger 50 may be provided in the coolant circulation channel such that heat exchange is performed between the coolant and supplied water, whereby the water receives heat from the high-temperature coolant.

The hot air generated by the hot water heat exchanger 50 may be stored in a hot water storage tank 51 so as to be supplied to hot water consumers, such as buildings.

When the hot water consumers do not use hot water, no water is supplied to the hot water heat exchanger 50, whereby the temperature of the coolant increases. In order to prevent this, an additional radiator 70 may be provided to discharge unnecessary heat of the coolant to the outside.

In the radiator 70, heat exchange is performed between the high-temperature coolant and air through a plurality of fins. In order to accelerate radiation, a radiation fan 72 may be provided.

The coolant that exits the engine is distributed to the hot water heat exchanger 50 and the radiator 70. A three-way valve 53 may be mounted at the distribution point thereof in order to control the flow direction of the coolant depending on the circumstances. Through the three-way valve 53, the coolant may be sent only to the hot water heat exchanger 50 or only to the radiator 70. Depending on the circumstances, the coolant may be sent to the hot water heat exchanger 50 and the radiator 70 in predetermined proportions.

The coolant that has passed through the three-way valve 53 and that has lost heat due to radiation by the radiator 70 may be mixed with the coolant that has passed through the three-way valve 53 and the hot water heat exchanger 50, and the mixture may be introduced into the engine 30.

In addition, a coolant pump 55 may be mounted in the coolant circulation channel in order to adjust the flow speed of the coolant. The coolant pump 55 may be mounted in the coolant circulation channel downstream of the hot water heat exchanger 50 and the radiator 70 and upstream of the engine 30.

Meanwhile, the exhaust gas discharged through the exhaust manifold 34 of the engine 30 operates the turbocharger 20. In addition, an exhaust gas heat exchanger 60 may be provided to collect waste heat of the exhaust gas.

The exhaust gas heat exchanger 60 may be mounted in the coolant circulation channel between the coolant pump 55 and a point upstream of the engine 30. The exhaust gas heat exchanger 60 may be configured to perform heat exchange between the exhaust gas discharged through the turbocharger 20 and the coolant. Waste heat of the exhaust gas may be collected through the exhaust gas heat exchanger 60.

While passing through the exhaust gas heat exchanger 60, the coolant is heated to some extent, whereby the coolant is introduced into the engine 30 in a tepid state. In this case, however, the coolant may sufficiently cool the engine 30.

The exhaust gas radiated while passing through the exhaust gas heat exchanger 60 passes through a muffler 80, by which the exhaust noise of the engine may be reduced.

The exhaust gas that has passed through the muffler 80 passes through a drain filter 85 and is then discharged to the outside. The drain filter 85 has purifying stone therein in order to purify condensed water generated in the muffler 80 and an exhaust gas line. Consequently, acidic condensed water may be purified, neutralized, and discharged to the outside.

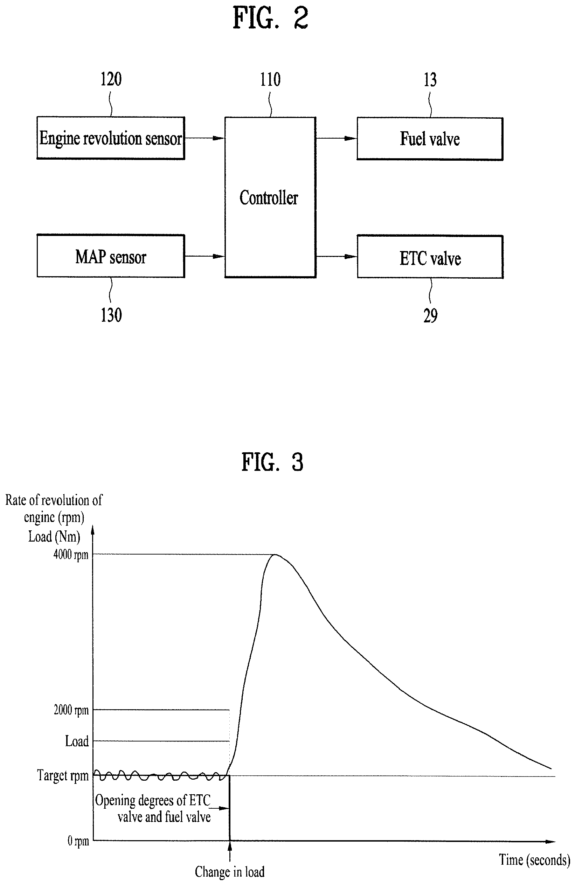

FIG. 2 is a block diagram showing sensors and valves connected to the controller.

The controller 110 controls the operation of the combined heat and power generation system, which includes the engine, various sensors, and various valves.

In particular, the engine may be provided with an engine revolution sensor 120 in order to calculate the number of revolutions per minute (RPM) of the engine.

In addition, the intake manifold 32 may be provided with a manifold absolute pressure sensor (MAP) sensor 130 for measuring intake pressure. Consequently, it is possible to reversely calculate the magnitude of the load from the intake pressure of the air/fuel mixture introduced into the engine.

Generally, when a larger amount of mixture of fuel and air is introduced, the rate of revolution of the engine is increased, whereby output, i.e. the amount of electric power, is increased.

The fuel valve 13 is provided at the inlet side of the mixer 16 to adjust the amount of gas fuel to be mixed with air. When a larger amount of gas fuel is supplied, the mixing ratio of the mixture of air and fuel is increased.

In addition, the electronic throttle control (ETC) valve 29 is provided at the inlet side of the intake manifold 32 to adjust the amount of air/fuel mixture introduced into the engine. When a large amount of air/fuel mixture is supplied, the engine output is increased.

The controller 110 adjusts the opening degree of the fuel valve 13 and the opening degree of the ETC valve 29 in order to control the operation of the engine 30. When the opening degree of the fuel valve 13 and the opening degree of the ETC valve 29 are increased, the rate of revolution of the engine is also increased.

FIG. 3 is a graph showing a change in the rate of revolution of the engine when a load is removed.

It can be seen from FIG. 3 that if the opening degrees of the fuel valve 13 and the ETC valve 29 are simply reduced when a load is abruptly changed (reduced) while control is being performed to adjust the opening degrees of the fuel valve 13 and the ETC valve 29 such that the engine follows the target rate of revolution, the rate of revolution of the engine is quickly increased and then slowly decreased. That is, if control is not performed to change an ignition angle according to the present invention, high overshoot occurs.

For example, if the load is reduced to 0 Nm due to breakdown of the electric power converter while the engine is being operated at 1800 RPM under a load of 100 Nm, the rate of revolution of the engine is abruptly increased up to a maximum of 4000 RPM due to overshoot.

Generally, the pulley of the engine and the pulley of the generator are connected to each other at a ratio of 1:3. When the engine is rotated at 4000 RPM, therefore, the generator is rotated at 12000 RPM. As a result, the generator may be burned out, or bearings may be damaged.

When the load is abruptly reduced or removed, it is necessary to prevent an abrupt increase in the rate of revolution of the engine while urgently stopping the engine.

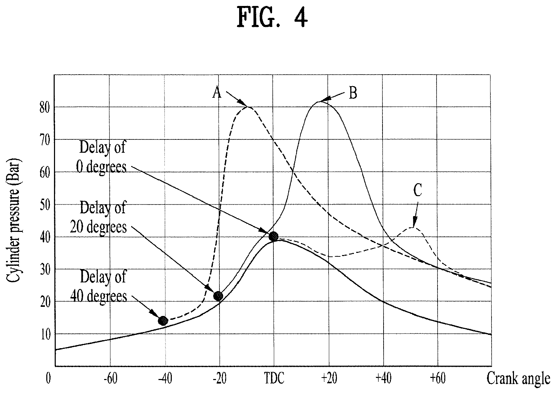

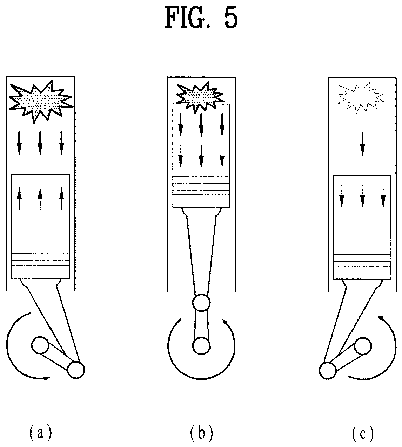

FIG. 4 is a graph showing a change in the pressure of the cylinder depending on the ignition angle, and FIG. 5 is a schematic view showing the states after explosion is performed in the cylinder for respective ignition angles.

The engine is an internal combustion engine that explodes an air/fuel mixture introduced into the cylinder by igniting an ignition plug such that the explosion force pushes a piston in order to rotate a crankshaft.

The piston is reciprocated between a top dead center (TDC) and a bottom dead center (BDC). The engine suctions air/fuel mixture, compresses the air/fuel mixture through the movement of the position, explodes the air/fuel mixture using the ignition plug to obtain output, and exhausts the air/fuel mixture.

Generally, the controller performs before-top-dead-center (BTDC) control such that the ignition plug is ignited before the piston reaches top dead center. That is, on the assumption that the angle of the crankshaft when the piston is located at top dead center is 0 degrees, for example, ignition at the time preceding by 10 degrees may be a 10-degree delay of the ignition angle.

At a 20-degree delay of the ignition angle, explosion is performed through normal combustion when the piston moves downward, as shown in FIG. 5(b). Consequently, it is possible to stably secure output. In FIG. 4, the maximum cylinder pressure is indicated by "B." During normal operation of the engine, therefore, the operation may be performed at a delay of about 20-degrees.

At a 40-degree delay of the ignition angle, explosion is performed through normal combustion while the piston moves upward, as shown in FIG. 5(a). As a result, the direction in which explosion pressure is applied is opposite the direction in which the piston moves. Consequently, the maximum output at the time of explosion is lower than the case of 20-degree delay. In this case, it can be seen from FIG. 4 that the maximum cylinder pressure "A" is lower than the maximum cylinder pressure "B."

At a 3- to 0-degree delay of the ignition angle, explosion is performed in the state in which no pressure is generated in the cylinder, as shown in FIG. 5(c). As a result, abnormal combustion or no combustion is performed, whereby the engine has no output. In this case, it can be seen from FIG. 4 that the maximum cylinder pressure "C" is not much higher than the pressure when the piston passes top dead center.

In order to reduce the engine output and thus to urgently stop the engine, therefore, the ignition angle of the ignition plug may be changed to 0 degree to a delay of 3 degrees.

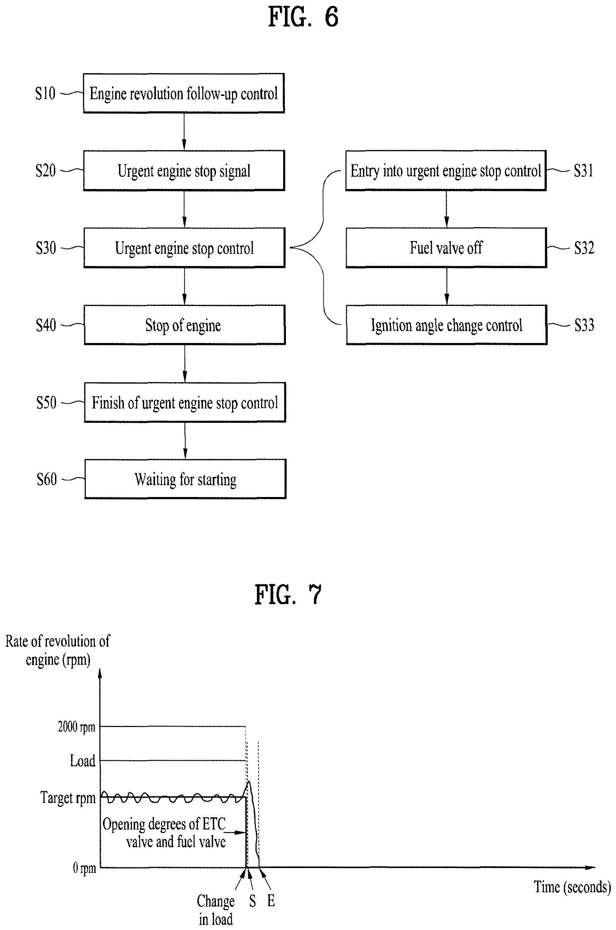

Hereinafter, a method of controlling a combined heat and power generation system according to the present invention will be described with reference to FIGs. 6 and 7.

When the engine of the combined heat and power generation system is operated, the controller 110 adjusts the opening degree of the fuel valve 13 and the opening degree of the ETC valve 29 based on the magnitude of the load such that the engine follows the target rate of revolution.

At this time, the engine may be operated in the state in which the ignition angle of the ignition plug is delayed by 25 to 15 degrees.

Since the load is changed depending on the external situation, a target value of number of revolutions per minute (RPM) of the engine may be changed so as to correspond thereto, and control may be performed such that the engine follows the target RPM (S10).

When an emergency occurs in the combined heat and power generation system, the controller may receive an urgent engine stop signal (S20).

Such an emergency is the abrupt reduction or removal of the load. In addition, the emergency may be the case in which the engine is overheated and thus the temperature of the coolant exceeds a predetermined value or the rate of revolution of the engine exceeds a predetermined value.

When the load is abruptly changed, the engine revolution sensor 120 may sense an abrupt increase in the rate of revolution of the engine, and the controller 100 may urgently stop the engine based thereon.

In addition, when the temperature of the coolant sensed by the temperature sensor exceeds a predetermined temperature, the controller 100 may urgently stop the engine.

As described above, the controller 110 automatically recognizes the emergency in order to urgently stop the engine. Alternatively, an administrator may input an urgent engine stop command to the controller 110.

Upon receiving the urgent engine stop signal, the controller 110 performs control to urgently stop the engine (S30).

When the emergency occurs and the urgent engine stop signal is received, entry into urgent engine stop control is performed (S31).

First, the fuel valve 13 is closed to interrupt the further supply of fuel to the engine (S32). Even when the supply of fuel is interrupted, the engine may be operated for about 3 to 5 seconds due to the fuel remaining in the fuel supply line or the engine. Consequently, the fuel valve 13 may be immediately closed when the emergency occurs.

The fuel valve 13 is closed, and at the same time the ignition angle of the ignition plug is changed to a delay of 3- to 0-degrees (S33). In FIG. 7, "S" indicates the time at which the ignition angle change control is started, and "E" indicates the time at which the ignition angle change control is ended.

If the ignition angle change control is performed when an emergency occurs, for example, if the load has been removed, as shown in FIG. 7, the rate of revolution of the engine is increased due to overshoot. However, the peak thereof is not greatly increased, and the rate of revolution of the engine is abruptly decreased. In addition, no fuel is supplied to the engine. Consequently, the rate of revolution of the engine is rapidly reduced to 0 RPM.

As a result, the engine is stopped (S40), and the urgent engine stop control is finished while the emergency is released (S50). At this time, the ignition angle of the ignition plug is set to a delay of 25 to 15 degrees.

Finally, waiting is performed until the engine is started (S60).

According to the present invention, when an emergency occurs, for example, when a load is removed from the combined heat and power generation system, it is possible to urgently stop the engine through ignition angle change control.

In addition, when the load is abruptly reduced or removed, the rate of revolution of the engine is not greatly increased due to overshoot, whereby it is possible to rapidly reduce the rate of revolution of the engine such that the engine is stopped.

Next, a method of controlling a combined heat and power generation system will be described.

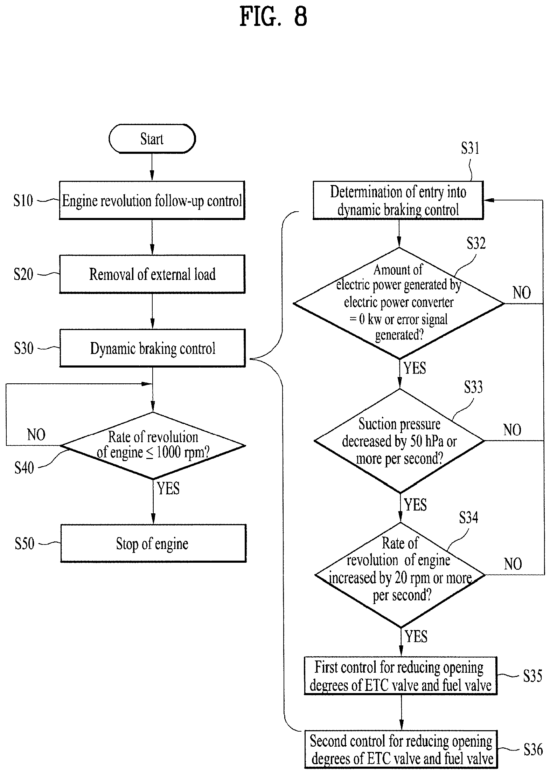

FIG. 8 is a flowchart showing a method of controlling a combined heat and power generation system.

When the engine of the combined heat and power generation system is operated, the controller 110 adjusts the opening degree of the fuel valve 13 and the opening degree of the ETC valve 29 based on the magnitude of the load such that the engine follows the target rate of revolution.

Since the load is changed depending on external situations, a target value of number of revolutions per minute (RPM) of the engine may be changed so as to correspond thereto, and control may be performed such that the engine follows the target RPM (S10).

An external load may be removed (S20), which means that the electric power converter 90 breaks down or no electric power is actually needed, whereby the load is removed.

When the external load is removed, dynamic braking control is performed (S30).

First, it is determined whether entry into dynamic braking control has been performed (S31). When the amount of electric power generated by the electric power converter 90 is 0 kW or an error signal is generated from the electric power converter 90 (S32), it may be recognized that the load has been removed.

In order to definitely determine that the load has been removed, however, it is determined whether the suction pressure of the air/fuel mixture suctioned into the engine is decreased by 50 hPa or more per second (S33), and it is determined whether the rate of revolution of the engine is increased by 20 RPM or more per second (S34).

The suction pressure of the air/fuel mixture is sensed by the MAP sensor 130. An abrupt reduction in the suction pressure means an abrupt reduction in the load.

The rate of revolution of the engine is sensed by the engine revolution sensor 120. When the load is abruptly reduced, the rate of revolution of the engine is sharply increased due to overshoot and is then slowly decreased. When the rate of revolution of the engine is increased by 20 RPM or more per second, therefore, it may be determined that overshoot occurs due to abrupt reduction in the load, rather than an increase in the load.

When the suction pressure of the air/fuel mixture is decreased by 50 hPa or more per second and the rate of revolution of the engine is increased by 20 RPM or more per second, it may be determined that the load is abruptly reduced, including the case in which the load is removed. Consequently, dynamic braking control is performed.

Dynamic braking control functions to gradually decrease the opening degrees of the ETC valve 29 and the fuel valve 13 in order to reduce the overshoot in the rate of revolution of the engine and to abruptly decrease the rate of revolution of the engine.

When the opening degree of the ETC valve 29 is reduced, the amount of air/fuel mixture that is introduced is decreased, whereby it is possible to prevent an abrupt increase in the rate of revolution of the engine. When the opening degree of the fuel valve 13 is reduced, the mixing ratio is decreased, whereby air/fuel mixture having a small amount of fuel is supplied. As a result, engine output is abruptly reduced.

The controller 110 reduces the opening degree of the ETC valve 29 by 20 to 30 % for 1 second and the opening degree of the fuel valve 13 by 30 to 40 % for 1 second in order to decrease the rate of revolution of the engine, which has been increased due to overshoot (first control) (S35).

When the opening degree of the ETC valve 29 is reduced by 20 % for 1 second and the opening degree of the fuel valve 13 is reduced by 30 % for 1 second with respect to the current state, it is possible to decrease the rate of revolution of the engine, which has been increased due to overshoot, and to greatly reduce the magnitude of the overshoot.

Next, the rate of revolution of the engine starts to decrease after passing the peak of the overshoot through the first control. Subsequently, the opening degree of the ETC valve 29 is reduced by 1 % for 1 second and the opening degree of the fuel valve 13 is reduced by 1 % for 1 second until the rate of revolution of the engine is equal to or less than a predetermined value (second control) (S36).

That the opening degree of each valve is reduced by 1 % for 1 second through the second control means that the opening degree of the valve is reduced by 1 % for 1 second relative to the current opening degree of the valve. That is, during the second control, control is performed to reduce the opening degree of the valve by 1 % relative to the opening degree of the valve 1 second beforehand.

The second control is performed to stably reduce the rate of revolution of the engine. Since the overshoot is greatly reduced through the first control, the rate of revolution of the engine may be more rapidly reduced to a predetermined value than in the case in which no dynamic braking control is performed.

Next, it is determined whether the rate of revolution of the engine is equal to or less than the predetermined value (S40). The predetermined value is the rate of revolution of the engine at which the engine can be stably stopped. For example, for an engine configured to be normally operated at about 1800 RPM, the predetermined value may be set to 1000 RPM.

Finally, when the rate of revolution of the engine is equal to or less than the predetermined value, the second control is finished, and the fuel valve 13 is completely closed to stop the engine (S50).

Since the rate of revolution of the engine is stably reduced at the time at which the second control is finished, the engine may be stably stopped with little overshoot even when the fuel valve 13 is completely closed.

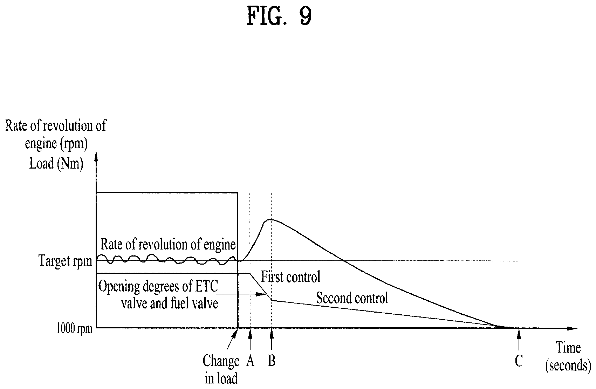

FIG. 9 is a graph showing a change in the rate of revolution of the engine as the result of dynamic braking control when a load is removed while engine revolution follow-up control is performed.

The controller 110 adjusts the opening degrees of the ETC valve 29 and the fuel valve 13 such that the engine is rotated at a target RPM (for example, 1800 RPM) (follow-up control).

When the load is removed, the controller 110 determines whether the load has been removed and starts to perform dynamic braking control. In the graph, time "A" is the time at which first control starts to be performed.

At time "A," a time delay of about 0.5 seconds occurs from the time at which the load is changed. The reason for this is that it takes time in order to determine whether the load has been removed.

The rate of revolution of the engine, which has been increased due to overshoot, is decreased through first control, in which the opening degree of the ETC valve 29 is reduced by 20 to 30 % for 1 second and the opening degree of the fuel valve 13 is reduced by 30 to 40 % for 1 second.

After the time for which the first control is performed, second control starts to be performed at time "B." The opening degree of the ETC valve is reduced by 1 % for 1 second and the opening degree of the fuel valve is reduced by 1 % for 1 second until the rate of revolution of the engine is equal to or less than a predetermined value (for example, 1000 RPM) through the second control.

At time "C," the rate of revolution of the engine is reduced to the predetermined value, i.e. 1000 RPM. When a decrease in the rate of revolution of the engine is sensed by the engine revolution sensor 120, the second control is finished, and the fuel valve 13 is completely closed to stably stop the engine.

According to the second embodiment of the present invention, when a load is removed, it is possible to perform control such that overshoot is reduced and the rate of revolution of the engine is decreased, whereby it is possible to stably stop the engine.

In addition, it is possible to prevent an excessive increase in the rate of revolution of the engine and to stably stop the engine, whereby it is possible to prevent damage to the generator and the bearings.

## Claims

1. A combined heat and power generation system comprising:
an engine (30) using gas as fuel;
a generator (40) driven by the engine (30) for producing electric power;
an ignition plug provided in a cylinder of the engine (30) for performing ignition according to a cycle of a piston; and
a controller (110) for controlling the engine (30) and the ignition plug,
wherein when an emergency occurs and an urgent engine stop signal is input to the controller (110), the controller (110) is configured to change an ignition angle of the ignition plug to reduce an output of the engine (30), thereby urgently stopping the engine (30), **characterized in that** the controller is configured to close the fuel valve before the ignition angle is changed when the engine (30) is urgently stopped, and
wherein the emergency is determined when a suction pressure of air/fuel mixture is decreased by 50 hPa or more per second and a rate of revolution of the engine (30) is increased by 20 RPM or more per second.

2. The combined heat and power generation system according to claim 1, wherein the controller (110) is configured to set the ignition angle such that explosion is performed immediately after the piston passes a top dead center when the engine (30) is normally operated and to set the ignition angle such that explosion is performed immediately before the piston reaches a bottom dead center when the engine (30) is urgently stopped.

3. The combined heat and power generation system according to any one of claims 1 to 2, wherein the controller (110) is configured to maintain the ignition angle at a delay of 25 to 15 degrees when the engine (30) is normally operated and to change the ignition angle to 0 degree to a delay of 3 degrees when the engine (30) is urgently stopped.

4. A method of controlling a combined heat and power generation system, comprising:
performing (S31) control such that an engine follows a target rate of revolution while fuel is supplied to the engine in order to rotate a generator for generating electric power;
determining whether an emergency occurs and an urgent engine stop signal is input, wherein the emergency is determined when a suction pressure of air/fuel mixture is decreased by 50 hPa or more per second and a rate of revolution of the engine (30) is increased by 20 RPM or more per second; and
when the urgent engine stop signal is input, closing (S32) a fuel valve and then changing (S33) an ignition angle of an ignition plug to reduce an output of the engine, thereby urgently stopping the engine.

5. The method according to claim 4, wherein
the engine revolution follow-up control step comprises setting the ignition angle such that explosion is performed immediately after a piston passes a top dead center, and
the urgent engine stop step comprises setting the ignition angle such that explosion is performed immediately before the piston reaches a bottom dead center.

6. The method according to any one of claims 4 to 5, wherein
the engine revolution follow-up control step comprises maintaining the ignition angle at a delay of 25 to 15 degrees, and
the ignition angle changing step comprises changing the ignition angle to 0 degree to a delay of 3 degrees.

## Patentansprüche

1. Kraftwärmekopplungssystem mit:
einem Motor (30), der Gas als Kraftstoff verwendet;
einem Generator (40), der durch den Motor (30) zur Erzeugung von elektrischer Energie angetrieben wird;
einer in einem Zylinder des Motors (30) vorgesehene Zündkerze zum Durchführen einer Zündung gemäß einem Arbeitstakt eines Kolbens; und
einer Steuereinheit (110) zum Steuern des Motors (30) und der Zündkerze, wobei, wenn ein Notfall auftritt und eine sofortiges Motorstoppsignal in die Steuereinheit (110) eingegeben wird, die Steuereinheit (110) konfiguriert ist, einen Zündwinkel der Zündkerze zu ändern, um eine Leistungsabgabe des Motors (30) zu reduzieren, wodurch der Motor (30) sofort gestoppt wird, **dadurch gekennzeichnet, dass** die Steuereinheit konfiguriert ist, das Kraftstoffventil zu schließen, bevor der Zündwinkel geändert wird, wenn der Motor (30) sofort gestoppt wird, und
wobei der Notfall festgestellt wird, wenn ein Ansaugdruck einer Luft/Kraftstoff-Mischung um 50 hPa oder mehr pro Sekunde gesenkt wird und eine Drehzahl des Motors (30) um 20 U/min oder mehr pro Sekunde erhöht wird.

2. Kraftwärmekopplungssystem nach Anspruch 1, wobei die Steuereinheit (110) konfiguriert ist, den Zündwinkel so einzustellen, dass eine Explosion ausgeführt wird, unmittelbar nachdem der Kolben einen oberen Totpunkt passiert, wenn der Motor (30) normal betrieben wird, und den Zündwinkel so einzustellen, dass eine Explosion ausgeführt wird, unmittelbar bevor der Kolben einen unteren Totpunkt erreicht, wenn der Motor (30) sofort gestoppt wird.

3. Kraftwärmekopplungssystem nach einem der Ansprüche 1 bis 2, wobei die Steuereinheit (110) konfiguriert ist, den Zündwinkel auf einer Verzögerung von 25 bis 15 Grad zu halten, wenn der Motor (30) normal betrieben wird und den Zündwinkel auf 0 Grad bis zu einer Verzögerung von 3 Grad zu ändern, wenn der Motor (30) sofort gestoppt wird.

4. Verfahren zum Steuern eines Kraftwärmekopplungssystems, das aufweist:
Durchführen (S31) einer solchen Steuerung, dass ein Motor einer Solldrehzahl folgt, während dem Motor Kraftstoff zugeführt wird, um einen Generator zum Erzeugen von elektrischer Energie zu drehen;
Feststellen, ob ein Notfall auftritt und ein sofortiges Motorstoppsignal eingegeben wird, wobei der Notfall festgestellt wird, wenn ein Ansaugdruck einer Luft/Kraftstoff-Mischung um 50 hPa oder mehr pro Sekunde gesenkt wird und eine Drehzahl des Motors (30) um 20 U/min oder mehr pro Sekunde erhöht wird; und
wenn das sofortige Motorstoppsignal eingegeben wird, Schließen (S32) eines Kraftstoffventils und dann Ändern (S33) eines Zündwinkels einer Zündkerze, um eine Leistungsabgabe des Motors zu reduzieren, wodurch der Motor sofort gestoppt wird.

5. Verfahren nach Anspruch 4, wobei
der Schritt zur Folgesteuerung der Motordrehzahl das Einstellen des Zündwinkels aufweist, so dass eine Explosion ausgeführt wird unmittelbar nachdem ein Kolben einen oberen Totpunkt passiert, und
der Schritt zum sofortigen Motorstopp das Einstellen des Zündwinkels aufweist, so dass eine Explosion ausgeführt wird, unmittelbar bevor der Kolben einen unteren Totpunkt erreicht.

6. Verfahren nach einem der Ansprüche 4 bis 5, wobei
der Schritt zur Folgesteuerung der Motordrehzahl das Halten des Zündwinkels auf einer Verzögerung von 25 bis 15 Grad aufweist, und
der Schritt zur Änderung des Zündwinkels das Ändern des Zündwinkels auf 0 Grad bis zu einer Verzögerung von 3 Grad aufweist.

## Revendications

1. Système de génération combinée de chaleur et d'électricité comprenant :
un moteur (30) utilisant du gaz comme carburant ;
un générateur (40) entraîné par le moteur (30) pour produire de l'énergie électrique ;
une bougie d'allumage prévue dans un cylindre du moteur (30) pour exécuter un allumage en fonction du cycle d'un piston ; et
un contrôleur (110) pour commander le moteur (30) et la bougie d'allumage,
où, lorsqu'une urgence survient et qu'un signal d'arrêt d'urgence du moteur est transmis au contrôleur (110), ledit contrôleur (110) est prévu pour modifier un angle d'allumage de la bougie d'allumage afin de réduire une sortie du moteur (30), arrêtant ainsi le moteur (30) en urgence, **caractérisé en ce que** le contrôleur est prévu pour fermer la soupape de carburant avant modification de l'angle d'allumage quand le moteur (30) est arrêté en urgence, et
où l'urgence est déterminée si la pression d'aspiration du mélange air/carburant est diminuée de 50 hPa ou plus par seconde et le régime du moteur (30) est augmenté de 20 RPM ou plus par seconde.

2. Système de génération combinée de chaleur et d'électricité selon la revendication 1, où le contrôleur (110) est prévu pour fixer l'angle d'allumage de sorte que l'explosion a lieu immédiatement après dépassement par le piston d'un point mort haut quand le moteur (30) fonctionne normalement, et pour fixer l'angle d'allumage de sorte que l'explosion a lieu immédiatement avant que le piston atteigne un point mort bas quand le moteur (30) est arrêté en urgence.

3. Système de génération combinée de chaleur et d'électricité selon la revendication 1 ou la revendication 2, où le contrôleur (110) est prévu pour maintenir l'angle d'allumage avec un décalage de 25 à 15 degrés quand le moteur (30) fonctionne normalement, et pour modifier l'angle d'allumage à 0 degré avec un décalage de 3 degrés quand le moteur (30) est arrêté en urgence.

4. Procédé d'une commande d'un système de génération combinée de chaleur et d'électricité, comprenant :
l'exécution (S31) d'une commande telle qu'un moteur suit un régime de consigne, du carburant étant refoulé vers le moteur afin de faire tourner un générateur destiné à générer de l'énergie électrique ;
la détermination si une urgence survient et un signal d'arrêt d'urgence du moteur est transmis, l'urgence étant déterminée si la pression d'aspiration du mélange air/carburant est diminuée de 50 hPa ou plus par seconde et le régime du moteur (30) est augmenté de 20 RPM ou plus par seconde ; et,
si le signal d'arrêt d'urgence du moteur est transmis, la fermeture (S32) d'une soupape de carburant puis la modification (S33) d'un angle d'allumage d'une bougie d'allumage afin de réduire une sortie du moteur, arrêtant ainsi le moteur en urgence.

5. Procédé selon la revendication 4, où
l'étape de commande de suivi du régime de moteur comprend la fixation de l'angle d'allumage tel que l'explosion a lieu immédiatement après dépassement par le piston d'un point mort haut, et
l'étape d'arrêt du moteur en urgence comprend la fixation de l'angle d'allumage tel que l'explosion a lieu immédiatement avant que le piston atteigne un point mort bas.

6. Procédé selon la revendication 4 ou la revendication 5, où
l'étape de commande de suivi du régime de moteur comprend le maintien de l'angle d'allumage avec un décalage de 25 à 15 degrés, et
l'étape de modification de l'angle d'allumage comprend la modification de l'angle d'allumage à 0 degré avec un décalage de 3 degrés.
